# EUROPEAN PATENT SPECIFICATION

(11) **EP 0 399 587 B1**
(45) Date of publication and mention of the grant of the patent: **23.02.1994**
(21) Application number: 90201136.0
(22) Date of filing: 21.05.1990
(51) Int. Cl.: H04L 9/06

(54) **Method for enciphering a series consisting of at least one symbol**
Verfahren zum Verschlüsseln einer Folge, die aus mindestens einem Symbol besteht
Procédé de chiffrage d'une série consistant d'au moins un symbole

(30) Priority: 26.05.1989 NL 8901323
(43) Date of publication of application: 28.11.1990
(73) Proprietor: Koninklijke PTT Nederland N.V., 2509 CH Den Haag (NL)
(72) Inventor: Boly, Jean Paul, NL-2381 BL Zoeterwoude (NL); Roelofsen, Gerrit, NL-2805 DD Gouda (NL)

(56) References cited:
- EP-A- 0 105 553
- EP-A- 0 221 558
- US-A- 4 301 327
- PROCEEDINGS OF THE IEEE, vol. 67, no. 3, March 1979, pages 397-427, IEEE, New York, US; W. DIFFIE et al.: "Privacy and authentication: An introduction to cryptography"
- IEEE TRANSACTIONS ON COMPUTERS, vol. C-28, no. 10, October 1979, pages 747-753, IEEE, New York, US; J.B. KAM et al.: "Structured design of substitution-permutation encryption networks"
- IBM TECHNICAL DISCLOSURE BULLETIN, vol. 20, no. 10, March 1978, pages 3984-3985, New York, US; W.F. EHRSAM et al.: "Key-controlled substitution scheme for cryptographic applications"

## Description

The invention relates to a method for enciphering a series consisting of n symbols, where n > 0, which method comprises a substitution function.

When enciphering messages consisting of symbols of an alphabet, for example bits in the event of a binary alphabet, use can be made of two different enciphering techniques. The first concerns block enciphering, in which case blocks of the message to be enciphered, for example blocks of 64 bits, are always substituted blockwise by enciphered blocks of each in its turn for example 64 bits. The second enciphering technique concerns stream enciphering, in which case each series of n symbols of the message to be enciphered is combined with a key bit separately formed for each bit to be enciphered.

Both with block enciphering and with stream enciphering substitution devices are often made use of. Such substitution devices, which substitute a series of bits by another series of bits according to a prescribed pattern, are known to experts in this field under the name of S-boxes, which name will consequently be used for such devices in what follows. S-boxes form an important part of encipher algorithms and are used to increase the non-linearity of such an algorithm.

In order to create a strong, that is a difficult to decipher, encipher algorithm by means of an S-box, it is known that the S-box must have good statistical and non-linear properties. The fact that the strength of an encipher algorithm may be very closely connected with the quality of the S-box used has inter alia been described by A.G. Konheim in "Cryptography: A primer", A. Wiley & Sons, New York, 1981, pp. 248-249; and by A. Shamir in Proceedings of Crypto, 1985, pp. 280-281. In view of the requirements S-boxes have to comply with, there are only a limited number of S-boxes with good statistical and nonlinear properties. Because of the fact that, comparatively speaking, there are only a few good S-boxes, these S-boxes are in general preselected when designing an encipher algorithm. The drawback of this is, however, that said S-boxes will perhaps soon become common knowledge, so that in principle it will not be impossible for an unauthorised person to decipher a message enciphered by means of such a known S-box.

A considerable improvement of messages enciphered with the aid of S-boxes, and consequently an encipher algorithm which is less simple to recover would be achieved, if all the possible S-boxes that can provide a substitution from n bits to k bits could be used. This has, however, not been possible up to now because of the above-mentioned reasons.

The object of the present invention is to offer the aforesaid possibility and for that purpose it provides a method of the above-mentioned kind, with which on the basis of a key according to a predetermined method at least one arbitrary substitution table, which substitutes each possible series of n symbols by a specific series of k symbols, where k > 0, is generated, and in which always a second series of k symbols which has a good statistical distribution is combined with one of the two series of symbols.

To obtain this, the invention is characterized in that by means of a key at least one arbitrary substitution table is generated, which table substitutes each possible series of n symbols by a specific series of k symbols, where k > 0, and that a second series of k symbols, which series has a good statistical distribution, is combined with one of the two first-named series of symbols, to obtain an enciphered output series.

The invention is based on the understanding that the reliability of the substitution function used in the encipher algorithm will be augmented considerably, if both the transmitting party and the receiving party create one and the same arbitrary S-box on the basis of a secret key transmitted via a key channel, which involves of course the risk that in this case a bad S-box, that is an S-box with bad statistical properties, and consequently a substition which can be relatively simply recovered by an unauthorised person, is formed. This problem is, according to a first embodiment of the invention, however, obviated by adding to the series of k symbols delivered at the output terminal of the S-box a second series of k symbols by means of a combination function, said second series having a good statistical distribution, for in that case it can be proved that the result of this addition has not only a good statistical distribution, but also the non-linear properties of the S-box.

According to a second embodiment of the invention the second series of k bits is added to the series of n bits which is supplied to the substitution table. In this case too it can be proved that good statistical properties of the series of k bits at the input terminal of the S-box are also existing at the output terminal of the same, while the non-linear properties of the S-box are of course retained.

It is noted that the article "Privacy and authentication: An introduction to crypthography" by W. Diffie and M.E. Hellman in Proceedings of the IEEE, Vol. 67, no. 3, pp. 397-427 gives a good introduction to encyphering including the use of S-boxes. On page 409, left-hand collumn, lines 18-26, and 34-42, this citation refers to a known version of an enciphering system based on bijective S-boxes with a specific key dependence, and analyses its problems. In such type of S-boxes each substitution word should be chosen differently. As a consequence of this specific key dependence a randomly generated key could not be used for creating the S-boxes. Moreover the key length would have to be unmanageable long. To avoid these and other problems of the key dependent S-boxes the use of a set of preselected S-boxes, whereby the choice of which S-box within the set of S-boxes will be used in a specific case of enciphering is key dependent, was proposed (cfr. line 43 and further of the same collumn and page). On the contrary the present invention gives a solution not only to these problems of key dependent bijective S-boxes, but even makes possible the use of any arbitrary S-box, which is generated on the basis of a randomly generated key, and which substitutes a series of n symbols by a series of k symbols, with k>0.

It is noted further that it is known from the European patent application 0.202.989 to make use of different predetermined substitution memories when enciphering a message in order to improve the strength of an encipher algorithm in this way, the choice of the substitution memory to be used for a specific enciphering being determined by a key and by the word to be enciphered. The number of different substitution memories which can be chosen by means of the key and the word to be enciphered is, however, limited, for example 4, and so it is not known in principle to be able to make use of all the possible substitutions from n to k bits, as it is suggested according to the present invention, the substitution chosen in a specific case being determined by a key which is only known to the transmitting and to the receiving party.

The invention will be further elucidated in what follows with the aid of the drawing, in which:
Figure 1 shows: a diagrammatic representation of a first variant of the principle underlying the invention;
Figure 2 shows: a diagrammatic representation of a second variant of this principle;
Figure 3 shows: a diagrammatic representation of a first embodiment, and
Figure 4 shows: a diagrammatic representation of a second embodiment.

Before describing the figures, it is noted that the invention is applicable for symbols of various alphabets, but that for the sake of simplicity the figures are adapted to the use of bits of the binary alphabet. For the sake of clearness in the figures, the lengths of the various series of bits are moreover directly indicated in the respective registers, which does not mean, however, that series of the same length are also the same with respect to their bit pattern. An S-box which substitutes an input series of n bits by a series of k bits is indicated by S(n,k), which notation too will always be used in what follows. In principle, the series of k bits can have any desired length.

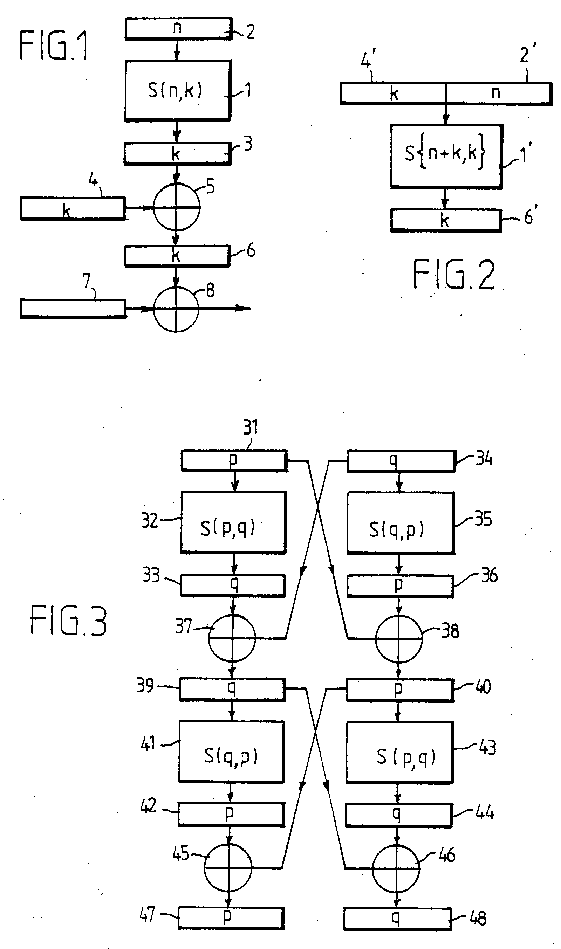

In figure 1, which shows a first so-called dynamic variant of the principle underlying the invention, the reference number 1 depicts an arbitrary S-box, which is able to substitute in an unambiguous way a series of n bits occurring in a register 2 by a series of k bits in an output register 3, k being chosen in the area 1 ≦ k ≦ n. Such an S-box can be a memory in which for each of the 2ⁿ possible input series an output series of k bits, determined according to a predetermined method, is stored.

When establishing a communication channel between two parties, via which enciphered messages have to be sent, a secret key will first be exchanged via a safe channel. On the basis of this key a functionally identical substitution table is created by the two parties according to a predetermined method, which table only needs good non-linear properties, whereas no demands are made on the statistical properties of the S-box formed.

A method for generating by means of a key an S(n,k)-box which is almost certain non-linear, but which has probably bad statistical properties, can for example be the following. A key with a length of L bits is divided into 2ⁿ portions of k bits, which are numbered consecutively. If for this purpose the length of the key is not great enough, which is mostly the case in practice, the key will be lengthened artificially by placing a number of identical copies of the key one after the other. Next said 2ⁿ portions of k bits are allocated in the sequence of their numbering to the 2ⁿ possible input series of the S-box. If in this case the key is randomly generated, the S-box will almost certain be non-linear. If, however, the key has often been repeated to form sufficient portions of k bits, there will be a great chance that the statistical properties are bad, because of the fact that in the S-box certain values come back above the average and others just below the average.

In a register 4 there is a second series of k bits, which series has, as it has been assured beforehand, a good statistical distribution of bits, such as a random or a pseudorandom series. In a modulo 2 adder 5 the bits in the registers 3 and 4 are added bitwise, and the series of k bits obtained at the output terminal of the modulo-2 adder 5 can be used for the stream enciphering of bits of a plain text supplied from a register 7. For that purpose said bits can, in the case that k=1, in a modulo-2 adder 8 be added bitwise to the so-called key bit at the output terminal of the adder 5 to provide at the output terminal of the adder 8 the so-called cipher bit to be transmitted.

With the aid of a simple example it will now first be explained in what follows that the modulo-2 addition of a series with good statistical properties to a series with unknown, perhaps good, but possibly bad statistical properties, will lead to a series which always has good statistical properties. For this purpose an arbitrary S-box which substitutes a series of n bits by one single output bit, so that consequently k=1, is taken as an example. It is assumed now that the chance that this output bit is a O is equal to p, and that the chance that the output bit is a 1 is equal to q, where p + q = 1. According to the invention one single bit is now added modulo-2 to said output bit, since it obtains that k=1. It is assumed that the chance that this bit is a 1 is equal to s, and that the chance that it is a O is equal to r, where r + s = 1. As, according to the invention, it is a condition that the series of k bits, which is added modulo-2 to the series of k bits at the output terminal of the S-box, has good statistical properties, it obtains for said single bit that r = s = 1/2. The chance of a O at the output terminal of the modulo-2 adder is equal to pr + sq, whereas the chance of a 1 is equal to ps + rq. As r = s = 1/2, it can be simply derived that it obtains that pr + sq = ps + rq = 1/2, so that the series at the output terminal of the modulo-2 adder has taken over the desired good statistical properties of the series of k bits added according to the invention.

The series of k bits added to the modulo-2 adder has not any influence on the desired non-linear properties of the series of bits at the output terminal of the S-box, since the addition takes place bitwise, and when for example an S-box substitutes a series of n bits by one single output bit, which is formed by a non-linear sum of combinations of one or more than one input bit, said sum will remain non-linear even after a modulo-2 addition.

It is a good thing to feed back either the key bit at the output terminal of the modulo-2 adder 5, or the cipher bit at the output terminal of the modulo-2 adder 8 to the input register 2, which for this purpose can be designed as a shift register. This has the advantage that the synchronisation between the transmitter and the receiver can be realised in a simpler way. If the receiver receives a cipher bit erroneously and feeds it back, or if it derives from this erroneously received signal an erroneous key bit and feeds it back, this error will be expressed in the shift register 2 in an erroneous deciphering of the received message. After n cycles this error will, however, be shifted by itself out of the shift register again, so that the erroneous deciphering will be limited to n bits, which is mostly acceptable.

Figure 2 shows a second, so-called statistical variant of the invention, which is based on the same principle and in which equal parts are depicted by equal reference numbers, but provided with a prime.

The series of n bits and the series of k bits, which has good statistical properties, are now supplied together to an S-box 1', which is adapted to substitute each series of n + k bits by a series of k bits, which series is identical to the series of k bits obtained by means of the method elucidated with the aid of figure 1, in case the series of n and k bits in the registers 2 and 4 are identical to the series of n and k bits in the registers 2' and 4', respectively. True enough, the memory capacity necessary for the S-box increases in principle from O (2ⁿ) to O (2^{n+k}), but an advantage is that not always for each bit a modulo-2 addition is required, so that the necessary computer time decreases. The symbol O is in this case a notation indicating an order of magnitude.

Figure 3 shows an embodiment which is suitable for stream enciphering and, with some adaptations, also for block enciphering. A block of p bits of a message to be enciphered in a register 31 is substituted by an S(p,q)-box 32 by a series of q bits in a register 33. At the same time a block of q bits of the message to be enciphered in a register 34 is substituted by an S(p,q)-box 35 by a series of p bits in a register 36. In a modulo-2 adder 37 the series in the registers 33 and 34 are added, whereas the series in the registers 31 and 36 are added in a modulo-2 adder 38. The series of q bits formed by said addition at the output terminal of the adder 37 is supplied to a register 39, whereas the series of p bits formed at the output terminal of the adder 38 is supplied to a register 40. The series in register 39 is substituted by an S(q,p)-box 41 by a series of p bits in a register 42, whereas the series in register 40 is substituted by an S(p,q)-box 43 by a series of q bits in a register 44. Now the series in the registers 40 and 42 are added in a modulo-2 adder 45, and the series in the registers 39 and 44 are added in a modulo-2 adder 46. The series of p bits formed by said addition at the output terminal of the adder 45 is supplied to a register 47, whereas the series of q bits formed at the output terminal of the adder 46 is supplied to a register 48. In this way blocks of respectively p and q bits can be enciphered by means of an arbitrary S-box, provided that the blocks of p and q bits have a good statistical distribution at a certain moment.

If desired, the contents of the registers 47 and 48 can for that purpose be fed back to the registers 31 and 34, respectively, and the substitution cycle can be passed through a number of times under the control of a counter. If p = q, all the S-boxes can be equal to one another and the configuration shown in figure 3 can be implemented in a simple way both in software and in hardware.

The embodiment shown in figure 3 is also suitable for block enciphering, provided that one of the modulo-2 adders 37 or 45 and one of the modulo-2 adders 38 or 46 with their preceding registers 33 or 42 and 36 or 44, respectively, are omitted as well as the connections of the omitted adders with the registers 34 or 40 and 31 or 39, respectively.

Moreover, the condition that p = q, which condition is self-evident, and the condition that the S-boxes 32, 35, 41 and 43 are bijective S-boxes should be fulfilled. Bijective S-boxes have the property that a series of n bits is substituted by another series of n bits, and that the substitution of the S-box can be inverted.

It will be explained in what follows in what way a key dependent bijective S(n,n)-box can be generated on the basis of a key with a length of L bits. At first the S-box is filled in such a way that each input value gets itself as substitution value. Subsequently, the key is divided up into 2ⁿ portions of n bits, which portions are numbered consecutively according to their position in the series of key bits.

If the length L of the key is insufficient, this can be solved by placing a number of copies of the key one after the other. Subsequently, the following steps are carried out:

According to step 0 the value w₀ of the portion of the key with position number 0, which value is a number between 0 and 2ⁿ-1, is calculated. Next the substitution values of the S-box with the input values 0 and w₀ are exchanged.

According to step 1 the value w₁ of the portion of the key with position number 1, which value is again a number between 0 and 2ⁿ-1, is calculated. Next the substitution values of the S-box with the input values 1 and w₁ are exchanged.

According to step i the value wᵢ of the portion of the key with position number i, which value is again a number between 0 and 2ⁿ-1, is calculated. Next the substitution values of the S-box with the input values i and wᵢ are exchanged.

In order to obtain the complete bijective S-box, at least 2ⁿ steps should preferably be carried out in the above-mentioned way, but if desired, more steps will be permitted.

It is noted that the number of possible bijective S(n,n)-boxes only forms part of all the possible S(n,n)-boxes, which is due to the specific properties of bijective S-boxes.

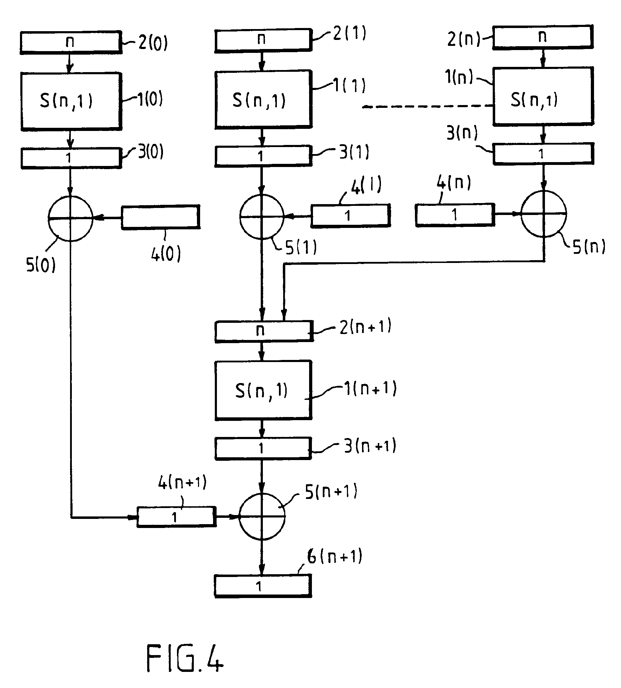

Figure 4 shows another embodiment of an algorithm with which on the basis of the present invention a key bit for stream enciphering can be obtained. This figure shows n + 1 circuits of the type shown in figure 1, where k = 1, equal parts being depicted by the same reference numbers as in figure 1, but with the addition of an index (0) up to and including (n+1). It is noted that although all the series of bits in the registers 2 are indicated by n, this only relates to the length of the series in those registers and not to the pattern of the series of bits. The various S-boxes 1 can in principle also carry out different substitutions from n bits to 1 bit. The n output bits of the modulo-2 adders 5(1) up to and including 5(n) form the input bit series of n bits for the S-box 1(n+1), whereas the output bit of the modulo-2 adder 5(0) is supplied to an input terminal of the modulo-2 adder 5(n+1), the other input terminal of which receives the output bit of the S-box 1(n+1) via the output register 3(n+1). By means of the algorithm of figure 4 a series of n bits can be converted into one single key bit in two steps, and if the series of bits supplied by the registers 4(0) up to and including 4(n) have a good statistical distribution, this also obtains for the key bit in the register 8(n+1), independent of the statistical properties of the S-boxes 1(0) up to and including 1(n+1), the non-linear properties of them being maintained.

## Claims

1. A method for enciphering a series (2, 2') consisting of n symbols, where n > 0, which method comprises a substitution function, characterised in that by means of a key at least one arbitrary substitution table (1, 1') is generated, which table substitutes each possible series of n symbols by a specific series (3, 3') of k symbols, where k > 0, and that a second series of k symbols, which series has a good statistical distribution, is combined with one of the two first-named series of symbols (3 or 2'), to obtain an enciphered output series (6, 3').

2. A method in accordance with claim 1, characterised in that the second series of k symbols at the input terminal of the substitution table is combined with the series of n symbols.

3. A method in accordance with claim 1, characterised in that the second series of k symbols, while retaining the length of the series, is combined with the series of k symbols which become available at the output terminal of the substitution table.

4. A method in accordance with claim 3, the symbols being bits, characterised in that the series of k symbols are combined by means of a modulo-2 addition.

5. A method in accordance with claim 4, characterised in that k = 1, in that in (n+1) substitution tables (1(0),.., 1(n)) each of (n+1) series (2(0),.., 2(n)) of n bits is substituted by 1 bit according to predetermined substitution methods, in that by means of (n+1) modulo-2 additions (5(0),.., 5(n)), each of said (n+1) bits is added to 1 bit of (n+1) series having a length of 1 bit and having a good statistical distribution, in that the output signals of n of the n+1 modulo-2 additions (5(0),.., 5(n)) are substituted by 1 bit according to a predetermined substitution method (1(n+1)), and in that this one bit is added modulo-2 to the output signal of the (n+1)th modulo-2 addition (5(0)).

6. A method according to claim 5, characterized in that at least some of the series (2(0),.., 2(n)) of n bits are different series and that at least the predetermined substitution methods are different substitution methods.

7. A method in accordance with claim 4, characterised in that in a first substitution table (32) a series (31) of p bits of a message to be encyphered is substituted by a series (34) of q bits, in that in a second substitution table (35) a series (33) of q bits of a message to be encyphered is substituted by a series (36) of p bits, in that the output series (33) of q bits of the first substitution table (32) is added modulo-2 (37) to the series (34) of q bits and that the output series (36) of p bits of the second substitution table (35) is added modulo-2 (38) to the series (31) of p bits, in that the series (39) of q bits obtained by the modulo-2 addition (37) is substituted by a series (42) of p bits in a third substitution table (41) and that the series (40) of p bits obtained by the modulo-2 addition (38) is substituted by a series (44) of q bits in a fourth substitution table (43), and in that the output series (42) of p bits of the third substitution table (41) is added modulo-2 (45) to the series (40) of p bits which is supplied to the fourth substitution table (43) and that the output series (44) of the fourth substitution table (43) is added modulo-2 (46) to the series (39) of q bits which is supplied to the third substitution table (41).

8. A method in accordance with claim 4, characterised in that in a first substitution table (32) a first series of p bits is substituted by a first series of q bits, in that in a second substitution table (35) a second series of q bits is substituted by a second series of p bits, in that the output series of p bits of the second substitution table (35) is added modulo-2 to the first series of p bits, in that the first series of q bits is substituted by a third series of p bits in a third substitution table (41) and the fourth series of p bits obtained by the modulo-2 addition is substituted by a third series of q bits in a fourth substitution table (43), and in that the output series of p bits of the third substitution table (41) is added modulo-2 to the third series of p bits which is supplied to the fourth substitution table (43).

9. A method in accordance with claim 7 or 8, characterised in that p = q.

10. A method in accordance with claim 9, characterised in that the four substitution tables are identical.

11. A method in accordance with at least one of the claims 7 - 10, characterised in that the series of p bits and of q bits, which are finally obtained as a result of the various substitutions, are fed back to the first and to the second substitution table, respectively, and in that this is repeated a predetermined number of times.

## Patentansprüche

1. Verfahren zum Verschlüsseln einer Folge (2, 2') bestehend aus n Symbolen, worin n > 0 ist, wobei das Verfahren eine Substitutionsfunktion umfasst, **dadurch gekennzeichnet, dass** mittels eines Schlüssels mindestens eine willkürliche Substitutionstabelle (1, 1') erzeugt wird, wobei diese Tabelle jede mögliche Folge von n Symbolen durch eine spezifische Folge (3, 3') von k Symbolen substituiert, worin k > 0 ist, und dass eine zweite Folge von k Symbolen, die eine gute statistische Verteilung aufweist, mit einer der zwei vorgenannten Symbolfolgen (3 oder 2') kombiniert wird, um eine verschlüsselte Ausgangsfolge (6, 3') zu gewinnen.

2. Verfahren nach Anspruch 1, **dadurch gekennzeichnet, dass** die zweite Folge von k Symbolen beim Eingangsterminal der Substitutionstabelle mit der Folge von n Symbolen kombiniert wird.

3. Verfahren nach Anspruch 1, **dadurch gekennzeichnet, dass** die zweite Folge von k Symbolen, unter Beibehaltung der Länge der Folge, mit den Folgen von k Symbolen kombiniert wird, die beim Ausgangsterminal der Substitutionstabelle erhältlich werden.

4. Verfahren nach Anspruch 3, wobei die Symbole Bits sind, **da****durch gekennzeichnet, dass** die Folgen von k Symbolen mittels einer Modulo-2-Addition kombiniert werden.

5. Verfahren nach Anspruch 4, **dadurch gekennzeichnet, dass** k=1 ist, dass in (n+1) Substitutionstabellen (1(0), ..., 1(n)) jede der (n+1) Folgen (2(0), ..., 2(n)) von n Bits gemäss vorbestimmten Substitutionsverfahren durch 1 Bit substituiert wird, dass mittels (n+1) Modulo-2-Additionen (5(0), ..., 5(n)) jedes der (n+1) Bits zu 1 Bit der (n+1) Folgen addiert wird, die eine Länge von 1 Bit und eine gute statistische Verteilung aufweisen, dass die Ausgangssignale von n der n+1 Modulo-2-Additionen (5(0), ...., 5(n)) durch 1 Bit substituiert werden gemäss vorbestimmten Substitutionsverfahren (1(n+1)), und dass dieses eine Bit modulo-2-artig zum Ausgangssignal der (n+1)ten Modulo-2-Addition (5(0)) addiert wird.

6. Verfahren nach Anspruch 5, **dadurch gekennzeichnet, dass** mindestens einige der Folgen (2(0), ..., 2(n)) von n Bits verschiedene Folgen sind, und dass mindestens die vorbestimmten Substitutionsverfahren verschiedene Substitutionsverfahren sind.

7. Verfahren nach Anspruch 4, **dadurch gekennzeichnet, dass** in einer ersten Substitutionstabelle (32) eine Folge (31) von p Bits einer zu verschlüsselnden Nachricht durch eine Folge (34) von q Bits substituiert wird, dass in einer zweiten Substitutionstabelle (35) eine Folge (33) von q Bits einer zu verschlüsselnden Nachricht durch eine Folge (36) von p Bits substituiert wird, dass die Ausgangsfolge (33) von q Bits der ersten Substitutionstabelle (32) modulo-2-artig (37) zur Folge (34) von q Bits addiert wird und dass die Ausgangsfolge (36) von p Bits der zweiten Substitutionstabelle (35) modulo-2-artig (38) zur Folge (31) von p Bits addiert wird, dass die durch die Modulo-2-Addition (37) erhaltene Folge (39) von q Bits durch eine Folge (42) von p Bits in einer dritten Substitutionstabelle (41) substituiert wird und dass die durch die Modulo-2-Addition (38) erhaltene Folge (40) von p Bits durch eine Folge (44) von q Bits in einer vierten Substitutionstabelle (43) substituiert wird, und dass die Ausgangsfolge (42) von p Bits der dritten Substitutionstabelle (41) modulo-2-artig (45) zur Folge (40) von p Bits addiert wird, die der vierten Substitutionstabelle (43) zugeführt wird und dass die Ausgangsfolge (44) der vierten Substitutionstabelle (43) modulo-2-artig (46) zur Folge (39) von q Bits addiert wird, die der dritten Substitutionstabelle (41) zugeführt wird.

8. Verfahren nach Anspruch 4, **dadurch gekennzeichnet, dass** in einer ersten Substitutionstabelle (32) eine erste Folge von p Bits durch eine erste Folge von q Bits substituiert wird, dass in einer zweiten Substitutionstabelle (35) eine zweite Folge von q Bits durch eine zweite Folge von p Bits substituiert wird, dass die Ausgangsfolge von n Bits der zweiten Substitutionstabelle (35) modulo-2-artig zur ersten Folge von p Bits addiert wird, dass die erste Folge von q Bits durch eine dritte Folge von p Bits in einer dritten Substitutionstabelle (41) substituiert wird und dass die vierte Folge von p Bits, die durch die Modulo-2-Addition erhalten wird, durch eine dritte Folge von q Bits in einer vierten Substitutionstabelle (43) substituiert wird, und dass die Ausgangsfolgen von p Bits der dritten Substitutionstabelle (41) modulo-2-artig zur dritten Folge von p Bits addiert wird, die der vierten Substitutionstabelle (43) zugeführt wird.

9. Verfahren nach Anspruch 7 oder 8, **dadurch gekennzeichnet,** **dass** p = q ist.

10. Verfahren nach Anspruch 9, **dadurch gekennzeichnet, dass** die vier Substitutionstabellen identisch sind.

11. Verfahren nach mindestens einem der Ansprüche 7 bis 10, **da****durch gekennzeichnet, dass** die Folgen von p Bits und q Bits, die man aufgrund der verschiedenen Substitutionen schlussendlich erhält, zur ersten bzw. zweiten Substitutionstabelle zurückgeführt werden, und dass dies eine vorbestimmte Anzahl Male wiederholt wird.

## Revendications

1. Procédé pour chiffrer une série (2, 2') consistant en n symboles, où n > 0, procédé qui comprend une fonction de substitution, caractérisé en ce que, au moyen d'une clé, au moins une table arbitraire de substitution (1, 1') est générée, table qui remplace chaque série possible de n symboles par une série spécifique (3, 3') de k symboles, où k > 0, et qu'une seconde série de k symboles, série qui a une bonne distribution statistique, est combinée avec l'une des deux séries de symboles (3 ou 2') mentionnées en premier afin d'obtenir une série de sortie chiffrée (6, 3').

2. Procédé selon la revendication 1, caractérisé en ce que la seconde série de k symboles sur la borne d'entrée de la table de substitution est combinée avec la série de n symboles.

3. Procédé selon la revendication 1, caractérisé en ce que la seconde série de k symboles, tout en conservant la longueur de la série, est combinée avec les séries de k symboles qui deviennent disponibles sur la borne de sortie de la table de substitution.

4. Procédé selon la revendication 3, dans lequel les symboles sont des bits, caractérisé en ce que les séries de k symboles sont combinées au moyen d'une addition modulo-2.

5. Procédé selon la revendication 4, caractérisé en ce que k = 1, en ce que, dans (n+1) tables de substitution (1(0),..., 1(n)), chacune de (n+1) séries (2(0),...,2(n)) de n bits est remplacée par 1 bit selon des méthodes de substitution prédéterminées, en ce que, au moyen de (n+1) additions modulo-2 (5(0),..,5(n)), chacun desdits (n+1) bits est ajouté à 1 bit de (n+1) séries ayant une longueur de 1 bit et ayant une bonne distribution statistique, en ce que les signaux de sortie de n des n+1 modulo-2 additions (5(0),.., 5(n)), sont remplacés par 1 bit selon une méthode de substitution prédéterminée (1(n+1)), et en ce que ce bit unique est ajouté modulo-2 au signal de sortie de la (n+1)ième addition modulo-2 (5(0)).

6. Procédé selon la revendication 5, caractérisé en ce qu'au moins quelques-unes des séries (2(0),..,2 (n)) de n bits sont des séries différentes et qu'au moins les méthodes de substitution prédéterminées sont des méthodes de substitution différentes.

7. Procédé selon la revendication 4, caractérisé en ce que, dans une première table de substitution (32), une série (31) de p bits d'un message à chiffrer est remplacée par une série (34) de q bits, en ce que, dans une deuxième table de substitution (35), une série (33) de q bits d'un message à chiffrer est remplacée par une série (36) de p bits, en ce que la série de sortie (33) de q bits de la première table de substitution (32) est ajoutée modulo-2 (37) à la série (34) de q bits et que la série de sortie (36) de p bits de la deuxième table de substitution (35) est ajoutée modulo-2 (38) à la série (31) de p bits, en ce que la série (39) de q bits obtenue par l'addition modulo-2 (37) est remplacée par une série (42) de p bits dans une troisième table de substitution (41) et que la série (40) de p bits obtenue par l'addition modulo-2 (38) est remplacée par une série (44) de q bits dans une quatrième table de substitution (43), en ce que la série de sortie (42) de p bits de la troisième table de substitution (41) est ajoutée modulo 2 (45) à la série (40) de p bits qui est fournie à la quatrième table de substitution (43) et en ce que la série de sortie (44) de la quatrième table de substitution (43) est ajoutée modulo-2 (46) à la série (39) de q bits qui est fournie à la troisième table de substitution (41).

8. Procédé selon la revendication 4, caractérisé en ce que, dans une première table de substitution (32), une première série de p bits est remplacée par une première série de q bits, en ce que, dans une deuxième table de substitution (35), une deuxième série de q bits est remplacée par une deuxième série de p bits, en ce que la série de sortie de p bits de la deuxième table de substitution (35) est ajoutée modulo-2 à la première série de p bits, en ce que la première série de q bits est remplacée par une troisième série de p bits dans une troisième table de substitution (41) et la quatrième série de p bits obtenue par l'addition modulo 2 est remplacée par une troisième série de q bits dans une quatrième table de substitution (43) et en ce que la série de sortie de p bits de la troisième table de substitution (41) est ajoutée modulo-2 à la troisième série de p bits qui est fournie à la quatrième table de substitution (43).

9. Procédé selon la revendication 7 ou 8, caractérisé en ce que p = q.

10. Procédé selon la revendication 9, caractérisé en ce que les quatre tables de substitution sont identiques.

11. Procédé selon au moins l'une des revendications 7 - 10, caractérisé en ce que les séries de p bits et les séries de q bits qui sont finalement obtenues comme résultat des différentes substitutions, sont réinjectées respectivement dans la première et la deuxième table de substitution et que ce processus est répété un nombre prédéterminé de fois.
